# EUROPÄISCHE PATENTSCHRIFT

(11) **EP 0 963 307 B1**
(45) Veröffentlichungstag und Bekanntmachung des Hinweises auf die Patenterteilung: **16.05.2001**
(21) Anmeldenummer: 98912390.6
(22) Anmeldetag: 25.02.1998
(51) Int. Cl.: B60Q 1/26

(54) **BEFESTIGUNGSVORRICHTUNG FÜR EIN FAHRZEUGTEIL**
FASTENING DEVICE FOR AUTOMOBILE ACCESSORIES
DISPOSITIF DE FIXATION POUR ACCESSOIRE AUTOMOBILE

(30) Priorität: 27.02.1997 DE 19707949
(43) Veröffentlichungstag der Anmeldung: 15.12.1999
(73) Patentinhaber: Volkswagen Aktiengesellschaft, 38436 Wolfsburg (DE)
(72) Erfinder: MÜLLER, Michael, D-38518 Gifhorn (DE)
(86) Internationale Anmeldenummer: EP9801065
(87) Internationale Veröffentlichungsnummer: WO9838063

(56) Entgegenhaltungen:
- DE-A- 3 137 342
- DE-C- 19 520 313
- FR-A- 2 753 147
- US-A- 4 358 234

## Beschreibung

Die Erfindung betrifft eine Befestigungsvorrichtung für ein Fahrzeugteil, insbesondere für eine Fahrzeugleuchte, in einer Öffnung eines Karosserieteils oder durch mehrere Karosserieteile gebildeten Öffnung, wobei das Fahrzeugteil den Rand der Öffnung zumindest teilweise überragt, mit mindestens einem Halteteil und mindestens einem Befestigungsmittel, mit dem das Halteteil an dem Fahrzeugteil haltbar ist.

Bei bisher bekannten Befestigungsvorrichtungen für Fahrzeugteile, die in einer Karosserieöffnung angeordnet sind, müssen üblicherweise im Randbereich der Karosserieöffnung Löcher, Nuten oder Befestigungsansätze zur Befestigung des Fahrzeugteiles vorgesehen werden. Bei Fertigungsungenauigkeiten des Karosserieteiles oder Fahrzeugteiles kann die Montage des Fahrzeugteiles an dem Karosserieteil schwierig sein.

Aus der deutschen Patentschrift DE 42 42 439 C1 ist eine Befestigungsvorrichtung, insbesondere für Leuchten, vorzugsweise für Kraftfahrzeugleuchten, mit mindestens einem Halteteil, das auf einem Gewindeteil eines Trägers sitzt und mit dem der Träger gegen eine Auflage verspannbar ist, der mindestens eine Aufnahmeöffnung aufweist, durch welche das Gewindeteil ragt und bei der das Halteteil bereits vor der Montage auf dem Gewindeteil mit einem Sicherungs- und Spannteil gesichert ist, das während der Montage in Verbindung mit dem Gewindeteil das Halteteil gegen die Auflage verspannt. Das Halteteil ist dort derart an dem Träger gehalten, das es beim Einführen in die Aufnahmeöffnung auf dem Schraubbolzen kippt, so daß es bei weiterem Andrücken durch die Aufnahmeöffnung hindurchtritt.

Bei einer derartigen Befestigungsvorrichtung müssen jedoch mehrere Halteteile zur Befestigung z. B. einer Leuchte vorgesehen werden, da das Halteteil nur über einen Teil seines Umfanges auf der Auflage anliegt. Das Anordnen von mehreren Halteteilen ist insbesondere schwierig, wenn es sich um kleinere zu befestigende Fahrzeugteile handelt, da in diesem Falle auch die Halteteile entsprechend kleiner dimensioniert werden müssen. Die Befestigung eines Fahrzeugteiles mit nur einem Halteteil ist mit einer derartigen Befestigungsvorrichtung nicht möglich.

Aus der DE 31 37 342 ist eine Befestigung einer Zusatzleuchte bekannt, wobei diese mittels eines Spannbügels und einer Schraubverbindung in einer Öffnung eines Spoilers befestigt ist. Der Spannbügel wird von hinten auf die in die Öffnung des Spoilers eingefügte Zusatzleuchte aufgesetzt, und durch die Schraubverbindung festgelegt. Für die Befestigung müssen beide Teile zunächst gehalten werden, wodurch die Montage verhältnismäßig umständlich ist und ein gewissen Geschick erfordert. Die Merkmale des Oberbegriffs des Anspruchs 1 sind aus der DE 3 137 342 bekannt.

Aufgabe der Erfindung ist es, die eingangs genannte Befestigungsvorrichtung so auszubilden, daß eine einfache, zeitsparende und sichere Montage auch kleinerer Fahrzeugteile möglich ist.

Die Aufgabe wird erfindungsgemäß durch die kennzeichnenden Merkmale des Anspruchs 1 gelöst. Vorteilhafte Aus- und Weiterbildungen sind in den abhängigen Ansprüchen gegeben.

Erfindungsgemäß wird vorgeschlagen, daß das Halteteil das Fahrzeugteil im wesentlichen umgreift und der Rand der Öffnung durch Befestigen des Halteteils mit dem Befestigungsmittel an dem Fahrzeugteil klemmartig zwischen Halteteil und Fahrzeugteil haltbar ist.

Weiterhin wird vorgeschlagen, daß das Halteteil mit dem Fahrzeugteil in die Öffnung einführbar ist, und daß das Halteteil oder zumindest ein Teil des Halteteils beim Einführen zusammendrückbar ist und nach dem Einführen unter Aufweitung den Rand der Öffnung rastartig hintergreift und durch Befestigen des Halteteils mit dem Befestigungsmittel an dem Fahrzeugteil, der Rand der Öffnung klemmartig zwischen Halteteil und Fahrzeugteil haltbar ist.

Das Befestigungsmittel kann vorteilhafterweise z. B. ein Gewindeteil sein, das in einem Mutterteil oder auf dem ein Mutterteil drehbar ist und dadurch eine kontinuierliche Zustellbewegung zwischen Halteteil und Fahrzeugteil erreichbar ist, die schließlich für die Erzeugung der erforderlichen Klemmkraft, die auf den Rand der Öffnung zwischen dem Halteteil und dem Fahrzeugteil wirkt, notwendig ist.

Das Gewindeteil kann entweder fest mit dem Halteteil oder fest mit dem Fahrzeugteil verbunden sein, wobei dann zweckmäßigerweise in dem jeweils anderen Teil ein mit dem Gewindeteil zusammenwirkendes Innengewinde vorgesehen ist.

Weiterhin wird vorgeschlagen, daß in dem Halteteil eine Öffnung, in die das Gewindeteil einführbar ist, vorgesehen ist.

Durch das Sicherungs- bzw. Spannteil wird es ermöglicht, daß durch das Eindrehen des Gewindeteils um z. B. 2 bis 3 Gewindegänge gegenüber dem Fahrzeugteil, das Halteteil verliersicher an dem Fahrzeugteil gehalten wird. Das Gewindeteil kann z. B. eine Befestigungsschraube sein, die in die Öffnung des Halteteils einführbar und in dem Fahrzeugteil verschraubbar ist. Der Schraubenkopf überragt dann die Öffnung des Halteteils und wirkt beim Verschrauben des Gewindeteils als Spann- bzw. Sicherungsteil.

Das Gewindeteil könnte auch ein Gewindezapfen sein, der durch die Öffnung hindurchragt und auf dessen freiem Ende eine Mutter aufschraubbar ist. Das Mutterteil überragt dann zweckmäßigerweise die Öffnung des Halteteils und wirkt als Sicherungs- oder Spannteil.

Ein weiterer Vorteil der Erfindung besteht darin, daß das Halteteil Rastkanten aufweisen kann. Das Halteteil rastet dadurch bei dem ersten Einführen in die Öffnung des Karosserieteils ein und nimmt eine vordefinierte Stellung ein. Das abschließende Befestigen erfolgt dann durch das Befestigungsmittel. Dadurch wird die Montage erheblich erleichtert, da die Bewegungsmöglichkeit des Fahrzeugteils mit dem Halteteil gegenüber dem Karosserieteil eingeschränkt ist.

Das Halteteil kann z. B. Schlitze aufweisen, die sich vorteilhafterweise bis zu dem dem Karosserieteil zugewandten Rand des Halteteils erstrecken. Mit den Schlitzen wird eine einfache Möglichkeit geschaffen, das Halteteil beim Einführen in die Karosserieöffnung zusammenzudrücken. Dieses ist insbesondere dadurch von Vorteil, da das Halteteil einerseits zusammendrückbar ausgebildet sein soll, andererseits eine Mindestformsteifigkeit in Richtung der Klemmkraft aufweisen muß, die zum Erzeugen der erforderlichen Klemmkraft notwendig ist.

Weiterhin wird vorgeschlagen, daß das Fahrzeugteil einen oder mehrere Freiräume aufweist, in die das Halteteil oder Teile desselben beim Einführen in die Öffnung aufnehmbar ist. Die Außenkontur des Fahrzeugteils im Bereich der Öffnung des Karosserieteils kann dadurch der Öffnung angepaßt werden, so daß sich ein möglichst spielfreier Sitz der befestigten Leuchte ergibt. Das Halteteil oder Teile desselben werden dann beim Einführen des Fahrzeugteils in die Öffnung in die Freiräume aufgenommen. Dadurch wird es ermöglicht, daß das Fahrzeugteil mit dem Halteteil ohne Festklemmen des Halteteils in der Öffnung des Karosserieteils befestigbar ist. Der Freiraum kann auch in der Form ausgebildet sein, daß er sich durchgängig über den ganzen Umfang erstreckt und das Fahrzeugteil im Bereich der Öffnung einen Absatz aufweist.

Als einfacher kostengünstiger und den Anforderungen genügender Werkstoff wird Kunststoff, insbesondere Polyamid, vorzugsweise PA 66 vorgeschlagen.

Ferner wird vorgeschlagen, daß zwischen dem Halteteil und dem Fahrzeugteil ein Federmittel vorgesehen ist. Durch das Federmittel wird das Halteteil von dem Fahrzeugteil weggedrückt und in einer vorgesehenen Stellung beim Einführen in die Öffnung des Karosserieteils gehalten. Diese vorgesehene Stellung ist vorzugsweise derart gewählt, daß das Halteteil beim Zusammendrücken in die Freiräume des Fahrzeugteils aufnehmbar ist.

Das Fahrzeugteil kann weiterhin auf der dem Halteteil zugewandten Seite einen Zapfen aufweisen, der durch eine Öffnung des Halteteils hindurchragt und an seinem freien Ende einen Zapfenkopf aufweist, der die Öffnung zumindest teilweise überragt. Das Halteteil wird durch den Zapfenkopf verliersicher an dem Fahrzeugteil gehalten. Ein Eindrehen des Gewindeteils, um ein bis zwei Gewindegänge um das Verlieren des Halteteils zu verhindern, ist damit nicht mehr erforderlich.

Zwischen Fahrzeugteil und dem Rand der Öffnung kann ein Dichtmittel vorgesehen werden, wodurch das Eindringen von Schmutz und Feuchtigkeit verhindert wird. In diesem Fall ist es zweckmäßig, daß das Halteteil das Fahrzeugteil im wesentlichen gleichmäßig umfangsseitig umgreift und durch Befestigen des Halteteils eine im wesentlichen gleichmäßige Klemmkraft auf das Dichtmittel ausübbar ist.

Nachfolgend wird die Erfindung anhand eines Ausführungsbeispieles näher erläutert. Die Zeichnungen zeigen:
- Figur 1: Befestigungsvorrichtung für eine Fahrzeugleuchte;
- Figur 2: Befestigungsvorrichtung für eine Fahrzeugleuchte mit einem Halteteil mit Schlitzen;
- Figur 3: Befestigungsvorrichtung für eine Fahrzeugleuchte mit einem Federmittel zwischen Fahrzeugleuchte und Halteteil;
- Figur 4: Befestigungsvorrichtung für eine Fahrzeugleuchte zum Zeitpunkt des Einführens der Fahrzeugleuchte in eine Karosserieöffnung;
- Figur 5: Befestigungsvorrichtung für eine Fahrzeugleuchte mit einem Halteteil im eingerasteten Zustand.
- Figur 6: Befestigungsvorrichtung mit zwischen Fahrzeugleuchte und Fahrzeugteil angeordneter Dichtung.

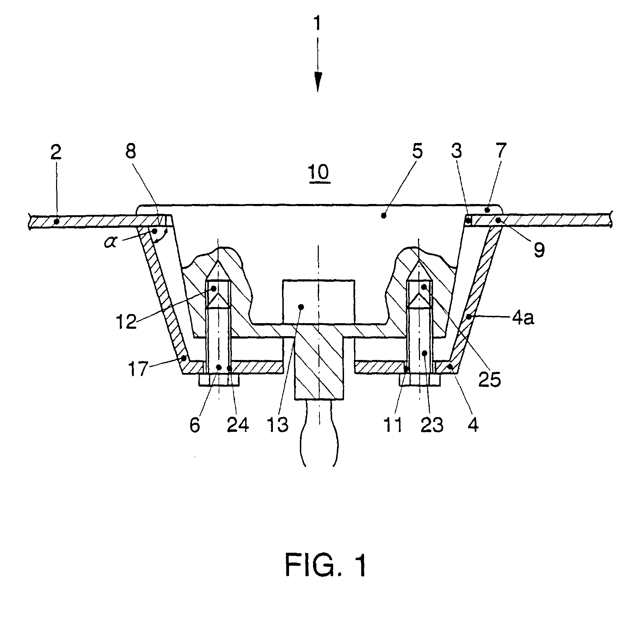

In Figur 1 ist eine Befestigungsvorrichtung für ein Fahrzeugteil 1, z.B. eine Fahrzeugleuchte, zu erkennen. Die Befestigungsvorrichtung kann jedoch auch für andere Fahrzeugteile verwendet werden. Die Fahrzeugleuchte 1 ist mit den Halteteilen 4 und 17 und den Gewindeteilen 6 und 23, hier dargestellt als Befestigungsschrauben, in der Karosserieöffnung 3 des Karosserieteils 2 befestigt. Die Fahrzeugleuchte 1 weist ein Gehäuse 5 und eine Abschlußscheibe 7 auf. Die Abschlußscheibe 7 überdeckt den Rand 9 der Karosserieöffnung 3 lichtaustrittsseitig mit der Fläche 8. An der von der Lichtaustrittsseite abgewandten Seite des Gehäuses 5 sind die Halteteile 4 und 17 angeordnet. In den Halteteilen 4 und 17 sind die Öffnungen 11 und 24 vorgesehen, in die die Befestigungsschrauben 6 und 23 einführbar sind. Die Halteteile 4 und 17 werden dann durch Einführen der Befestigungsschrauben 6 und 23 und Eindrehen derselben, um ein bis zwei Gewindegänge in die Gewindebohrungen 12 und 25 verliersicher an dem Gehäuse 5 gehalten. In dem Gehäuse 5 ist eine Leuchte z. B. eine Soffitenleuchte 13 angeordnet, deren Stromversorgung durch eine Trennstelle zwischen den Halteteilen 4 und 17 erfolgt. Die Stromversorgung kann jedoch auch anders ausgebildet sein, so daß nur ein Halteteil 4; 17 zur Befestigung der Fahrzeugleuchte 1 vorgesehen werden muß. Durch Verschrauben der Befestigungsschrauben 6 und 23 wird der Rand 9 des Karosserieteiles 2 klemmartig zwischen den Enden 4a und 17a der Halteteile 4 und 17 und der Abschlußscheibe 7 gehalten.

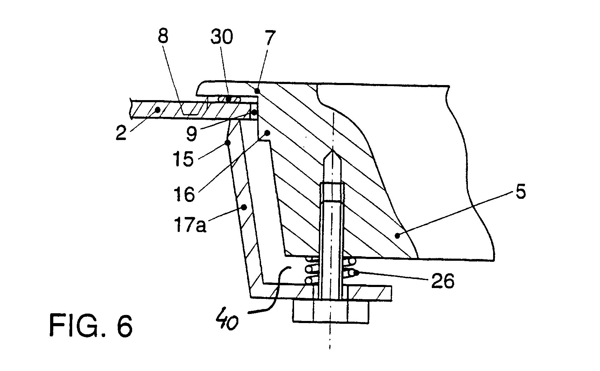

In Figur 6 ist zu erkennen, daß zwischen der Fläche 8 und dem Rand 9 ein Dichtmittel 30 vorgesehen ist, wodurch ein Eindringen von Feuchtigkeit verhindert wird. Die Halteteile 4 und 17 umgreifen das Fahrzeugteil 1 im wesentlichen gleichmäßig, so daß auf das Dichtmittel 30 eine gleichmäßige Klemmkraft ausgeübt wird und so eine gute Dichtwirkung erreicht wird. Außerdem ist durch diese gleichmäßige Klemmkraft sichergestellt, daß das Fahrzeugteil 1 zu der Öffnung 3 des Karosserieteils 1 ausgerichtet, d.h. zentrisch und an die Oberfläche des Karosserieteils 2 angepaßt, festgelegt ist.

Sinnvollerweise ist zwischen dem Fahrzeugteil 1 und den Halteteilen 4 und 17 ein Spalt 40 vorgesehen, der eine Weite von mindestens der Dicke des Karosserieteils 2 plus einem Zuschlag für das Dichtmittel 30 aufweist, wodurch es ermöglicht wird, eine ausreichende Klemmkraft auf den Rand 9 der Öffnung 3 auszuüben.

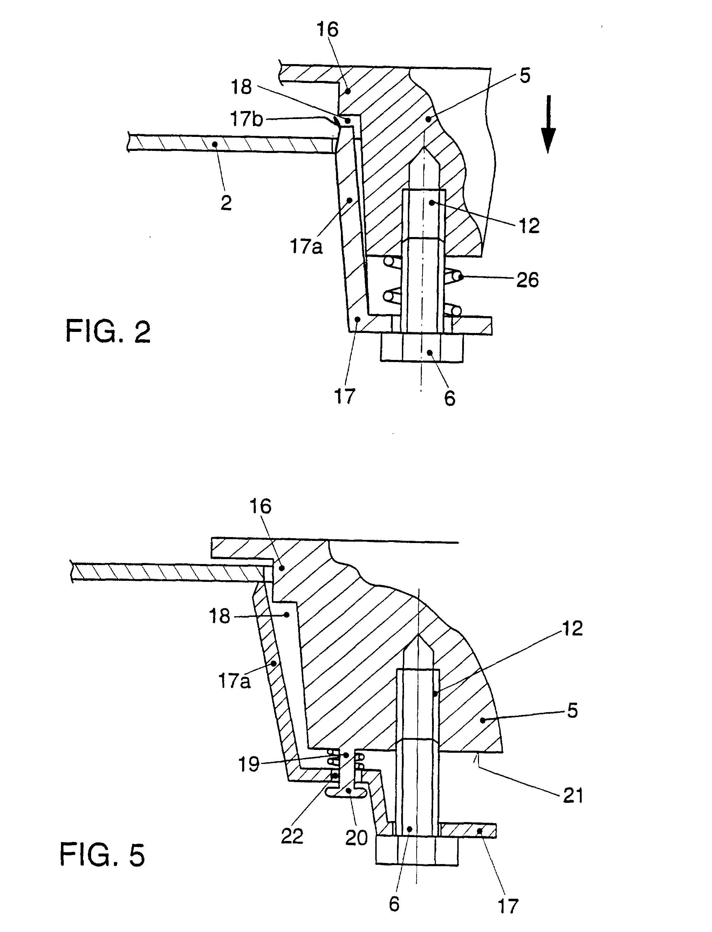

In Figur 2 ist ein Ausschnitt des Gehäuses 5 mit dem Halteteil 17 und der Befestigungsschraube 6 beim Einführen in die Karosserieöffnung 3 zu erkennen. Die Befestigungsschraube 6 ist mit ungefähr ein oder zwei Gewindegängen in die Gewindebohrung 12 eingedreht, so daß das Halteteil 17 verliersicher zwischen dem Kopf der Befestigungsschraube 6 und der Fahrzeugleuchte gehalten wird. Der Kopf der Befestigungsschraube 6 wirkt hier als Sicherungsteil und sichert das Halteteil 17. Denkbar wäre hier jedoch auch ein in dem Gehäuse 5 feststehendes oder eingedrehtes Gewindeteil vorzusehen, auf dessen freiem durch das Halteteil 17 hindurchragendem Ende eine Mutter aufgedreht wird. In diesem Fall würde die Mutter als Sicherungs- und Spannteil wirken, durch das das Halteteil 17 gesichert wird. Die Befestigung der Fahrzeugleuchte 1 würde dann durch Verdrehen der Mutter gegenüber dem Gewindeteil erfolgen. Zwischen Halteteil 17 und Gehäuse 5 ist das Federmittel 26 vorgesehen. Durch das Federmittel 26 wird das Halteteil 17 von der Fahrzeugleuchte 1 weggedrückt, so daß das Ende 17a des Halteteils 17 beim Zusammendrücken in dem Freiraum 18 des Gehäuses 5 aufgenommen wird. Nach dem Einführen des Halteteils 17 in die Karosserieöffnung 3 weitet sich das Halteteil 17 unter Rückverformung auf und hintergreift den Rand des Karosserieteiles 2 mit der Rastkante 17b rastartig. Das Gehäuse 5 kann dadurch im Bereich der Karosserieöffnung 3 in seinem Umfang an die Kontur der Karosserieöffnung 3 angepaßt werden, so daß ein sicherer und möglichst spielfreier Sitz des Gehäuses 5 in der Karosserieöffnung 3 gegeben ist. Das Halteteil 17 weist an seinem Ende 17a eine Phase 15 auf, wodurch die Demontage der Fahrzeugleuchte 1 durch Zusammendrücken und Einführen des Endes 17a des Halteteils 17 erleichtert wird.

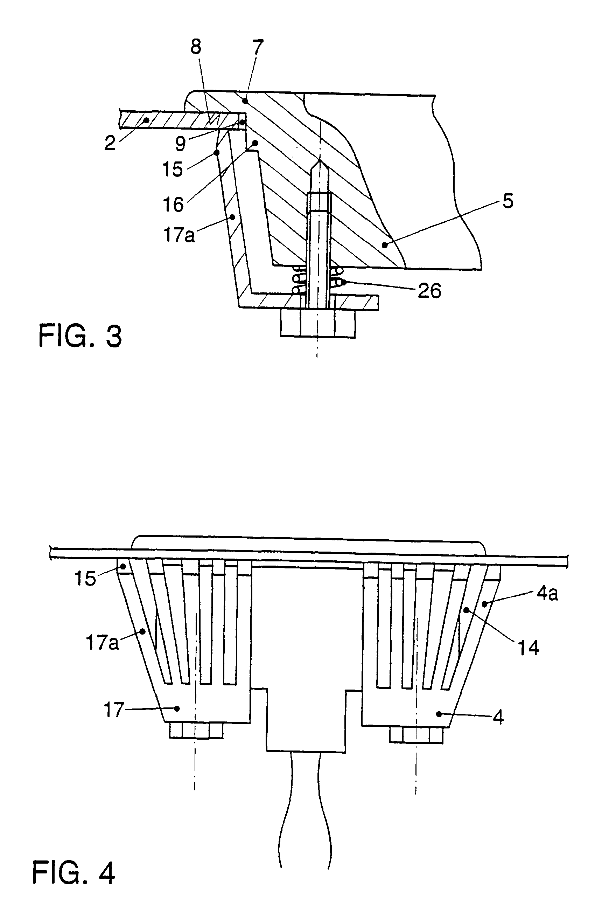

In Figur 3 ist ein Ausschnitt der Fahrzeugleuchte 1 im befestigten Zustand zu erkennen. Der Rand des Karosserieteiles 2 wird durch Festschrauben der Befestigungsschraube 6 in der Gewindebohrung 12 klemmartig zwischen der Fläche 8 der Abschlußscheibe 7 und dem Ende 17a des Halteteils 17 gehalten. Das Ende 17a des Halteteils 17 oder das gesamte Halteteil 17 ist aus einem formsteifen Kunststoff, z. B. PA 66, hergestellt, so daß ohne wesentliche Verformung des Halteteils 17 in Richtung der Klemmkraft die erforderliche Klemmkraft über das Halteteil 17 aufgebracht werden kann.

Das Gehäuse 5 weist im Bereich der Karosserieöffnung 3 einen Absatz 16 auf und ist damit möglichst spielfrei an die Kontur der Karosserieöffnung 3 angepaßt.

In Figur 4 sind die Halteteile 4 und 17 zu erkennen, wobei zwischen den Enden 4a und 17a der Halteteile 4 und 17 Schlitze 14 vorgesehen sind. Durch die Schlitze 14 ist eine einfache Möglichkeit des Zusammendrückens der Enden 4a und 17a der Halteteile 4 und 17 in radialer Richtung gegeben.

In Figur 5 ist eine alternative Möglichkeit gegeben, die Halteteile 17 verliersicher an der Fahrzeugleuchte 1 zu halten. An der den Halteteilen 4 und 17 zugewandten Seite 21 des Gehäuses 5 ist ein Zapfen 19 angeordnet, der durch eine Öffnung 22 des Halteteils 17 hindurchragt und an dessen freiem Ende einen Zapfenkopf 20 mit einem größeren Durchmesser als die Öffnung 22 angeordnet ist. Das Halteteil 17 ist durch den Zapfenkopf 20 verliersicher an dem Gehäuse 5 gehalten. Das Eindrehen der Befestigungsschrauben 6 in die Gewindebohrungen 12 um ein bis zwei Gewindegänge vor der Montage, um das Verlieren des Halteteils 17 zu verhindern, kann dadurch entfallen.

### BEUZUGSZEICHENLISTE

- 1: Fahrzeugleuchte
- 2: Karosserieteil
- 3: Karosserieöffnung
- 4: Halteteil
- 4a: Ende
- 5: Gehäuse
- 6; 23: Befestigungsschraube
- 7: Abschlußscheibe
- 8: Fläche
- 9: Rand
- 10: Lichtaustrittsseite
- 11; 24: Öffnung
- 12; 25: Gewindebohrung
- 13: Lichtquelle
- 14: Schlitze
- α: Winkel
- 15: Phase
- 16: Absatz
- 17: Halteteil
- 17a: Ende
- 18: Freiraum
- 19: Zapfen
- 20: Zapfenkopf
- 21: Seite
- 22: Öffnung
- 26: Federmittel
- 30: Dichtmittel
- 40: Spalt

## Patentansprüche

1. Befestigungsvorrichtung für ein Fahrzeugteil, insbesondere für eine Fahrzeugleuchte, in einer Öffnung (3) eines Karosserieteils oder durch mehrere Karosserieteile gebildeten Öffnung, wobei das Fahrzeugteil den Rand der Öffnung zumindest teilweise überragt, mit mindestens einem Halteteil (4) und mindestens einem Befestigungsmittel (6, 23), mit dem das Halteteil an dem Fahrzeugteil (1) haltbar ist, wobei das Halteteil das Fahrzeugteil im wesentlichen umgreift und der Rand (9) der Öffnung durch Befestigen des Halteteils mit dem Befestigungsmittel an dem Fahrzeugteil klemmartig zwischen Halteteil und Fahrzeugteil haltbar ist, dadurch gekennzeichnet, daß das Halteteil (4) mit dem Fahrzeugteil (1) in die Öffnung (3) einführbar ist, und das Halteteil (4) oder zumindest ein Teil des Halteteils (4) beim Einführen zusammendrückbar ist.

2. Befestigungsvorrichtung nach Anspruch 1, dadurch gekennzeichnet, daß das Befestigungsmittel (6; 23) ein Gewindeteil ist.

3. Befestigungsvorrichtung nach Anspruch 2, dadurch gekennzeichnet, daß das Gewindeteil fest mit dem Fahrzeugteil (1) verbunden ist.

4. Befestigungsvorrichtung nach Anspruch 2, dadurch gekennzeichnet, daß das Gewindeteil fest mit dem Halteteil (4) verbunden ist.

5. Befestigungsvorrichtung nach Anspruch 2 bis 4, dadurch gekennzeichnet, daß in dem Fahrzeugteil (1) oder Halteteil (4) ein mit dem Gewindeteil zusammenwirkendes Innengewinde vorgesehen ist.

6. Befestigungsvorrichtung nach einem der Ansprüche 2 bis 5, dadurch gekennzeichnet, daß auf dem freien Ende des Gewindeteils ein Sicherungs- oder Spannteil vorgesehen ist.

7. Befestigungsvorrichtung nach einem der Ansprüche 1 bis 6, dadurch gekennzeichnet, daß das Halteteil (4) Rastkanten aufweist.

8. Befestigungsvorrichtung nach einem der Ansprüche 1 bis 7, dadurch gekennzeichnet, daß das Halteteil (4) an dem Fahrzeugteil (1) vor dem Einführen in die Öffnung verliersicher haltbar ist.

9. Befestigungsvorrichtung nach einem der Ansprüche 1 bis 8, dadurch gekennzeichnet, daß das Halteteil (4) ein oder mehrere Schlitze (14) aufweist.

10. Befestigungsvorrichtung nach Anspruch 9, dadurch gekennzeichnet, daß sich die Schlitze (14) bis zu dem dem Karosserieteil (2) zugewandten Rand des Halteteils (4) erstrecken.

11. Befestigungsvorrichtung nach einem der Ansprüche 1 bis 10, dadurch gekennzeichnet, daß das Fahrzeugteil (1) einen oder mehrere Freiräume (18) aufweist, in die das Halteteil (4) oder Teile desselben beim Einführen in die Öffnung (3) aufnehmbar ist.

12. Befestigungsvorrichtung nach einem der Ansprüche 1 bis 11, dadurch gekennzeichnet, daß das Halteteil (4) aus einem Kunststoff besteht.

13. Befestigungsvorrichtung nach Anspruch 12, dadurch gekennzeichnet, daß der Kunststoff Polyamid, vorzugsweise PA 66, ist.

14. Befestigungsvorrichtung nach einem der Ansprüche 1 bis 13, dadurch gekennzeichnet, daß zwischen dem Halteteil (4) und dem Fahrzeugteil (1) ein Federmittel (26) vorgesehen ist.

15. Befestigungsvorrichtung nach einem der Ansprüche 1 bis 14, dadurch gekennzeichnet, daß auf der dem Halteteil (4) zugewandten Seite (21) des Fahrzeugteils (1) ein Zapfen (19) vorgesehen ist, der durch eine Öffnung (22) des Halteteils (4) hindurchragt und an seinem freien Ende einen Zapfenkopf (20) aufweist, der die Öffnung (22) zumindest teilweise überragt.

16. Befestigungsvorrichtung nach einem der Ansprüche 1 bis 15, dadurch gekennzeichnet, daß das Halteteil (4) an seinem dem Fahrzeugteil (1) zugewandten Ende eine Phase aufweist.

17. Befestigungsvorrichtung nach einem der vorangegangenen Ansprüche, dadurch gekennzeichnet, daß zwischen dem Fahrzeugteil (1) und dem Rand (9) der Öffnung (3) ein Dichtmittel (30) vorgesehen ist und das Halteteil (4) das Fahrzeugteil (1) umfangseitig im wesentlichen gleichmäßig umgreift und durch Befestigen des Halteteils (4) eine im wesentlichen gleichmäßige Klemmkraft auf das Dichtmittel ausübbar ist.

## Claims

1. Fastening device for a vehicle part, in particular for a vehicle light, in an opening (3) in a body part or an opening formed by a plurality of body parts, wherein the vehicle part at least partially protrudes over the edge of the opening, having at least one holding part (4) and at least one fastening means (6, 23), with which the holding part can be held on the vehicle part (1), wherein the holding part substantially engages around the vehicle part, and the edge (9) of the opening can be held in a clamped manner between the holding part and the vehicle part by fastening the holding part on the vehicle part with the fastening means, characterised in that the holding part (4) can be inserted into the opening (3) with the vehicle part (1), and the holding part (4) or at least a part of the holding part (4) can be compressed during insertion.

2. Fastening device according to claim 1, characterised in that the fastening means (6; 23) is a threaded part.

3. Fastening device according to claim 2, characterised in that the threaded part is fixedly connected to the vehicle part (1).

4. Fastening device according to claim 2, characterised in that the threaded part is fixedly connected to the holding part (4).

5. Fastening device according to claims 2 to 4, characterised in that an internal thread which cooperates with the threaded part is provided in the vehicle part (1) or holding part (4).

6. Fastening device according to one of claims 2 to 5, characterised in that a securing or clamping part is provided on the free end of the threaded part.

7. Fastening device according to one of claims 1 to 6, characterised in that the holding part (4) comprises locking edges.

8. Fastening device according to one of claims 1 to 7, characterised in that before being inserted into the opening, the holding part (4) can be held on the vehicle part (1) in such a way that it cannot be lost.

9. Fastening device according to one of claims 1 to 8, characterised in that the holding part (4) comprises one or a plurality of slits (14).

10. Fastening device according to claim 9, characterised in that the slits (14) extend to the edge of the holding part (4) facing the body part (2).

11. Fastening device according to one of claims 1 to 10, characterised in that the vehicle part (1) comprises one or a plurality of free spaces (18) into which the holding part (4) or parts thereof can be received during insertion into the opening (3).

12. Fastening device according to one of claims 1 to 11, characterised in that the holding part (4) consists of a synthetic material.

13. Fastening device according to claim 12, characterised in that the synthetic material is polyamide, preferably PA 66.

14. Fastening device according to one of claims 1 to 13, characterised in that a resilient means (26) is provided between the holding part (4) and the vehicle part (1).

15. Fastening device according to one of claims 1 to 14, characterised in that a spigot (19) is provided on the side (21) of the vehicle part (1) facing the holding part (4), which spigot protrudes through an opening (22) in the holding part (4) and, at its free end, comprises a spigot head (20) which protrudes at least partially beyond the opening (22).

16. Fastening device according to one of claims 1 to 15, characterised in that the holding part (4) comprises a phase on its end facing the vehicle part (1).

17. Fastening device according to any of the preceding claims, characterised in that a sealing means (30) is provided between the vehicle part (1) and the edge (9) of the opening (3), and the holding part (4) engages around the vehicle part (1) in a substantially uniform manner at the periphery, and by fastening the holding part (4) a substantially uniform clamping force can be exerted on the sealing means.

## Revendications

1. Dispositif de fixation pour une pièce de véhicule, notamment pour un feu de véhicule, dans une ouverture (3) d'une pièce de carrosserie ou dans une ouverture formée par plusieurs pièces de carrosserie, la pièce de véhicule dépassant au moins partiellement du bord de l'ouverture, lequel dispositif de fixation comporte au moins une pièce de retenue (4) et au moins un moyen de fixation (6 ; 23) avec lequel la pièce de retenue peut être tenue sur la pièce de véhicule (1), la pièce de retenue entourant globalement la pièce de véhicule et le bord (9) de l'ouverture pouvant être tenu coincé entre la pièce de retenue et la pièce de véhicule par la fixation de la pièce de retenue avec le moyen de fixation sur la pièce de véhicule, caractérisé en ce que la pièce de retenue (4) avec la pièce de véhicule (1) peut être introduite dans l'ouverture (3) et en ce que la pièce de retenue (4) ou au moins une partie de la pièce de retenue (4) peut être comprimée lors de l'introduction.

2. Dispositif de fixation selon la revendication 1, caractérisé en ce que le moyen de fixation (6 ; 23) est une pièce filetée.

3. Dispositif de fixation selon la revendication 2, caractérisé en ce que la pièce filetée est assemblée solidaire de la pièce de véhicule (1).

4. Dispositif de fixation selon la revendication 2, caractérisé en ce que la pièce filetée est assemblée solidaire de la pièce de retenue (4).

5. Dispositif de fixation selon les revendications 2 à 4, caractérisé en ce qu'un taraudage coopérant avec la pièce filetée est prévu dans la pièce de véhicule (1) ou dans la pièce de retenue (4).

6. Dispositif de fixation selon l'une des revendications 2 à 5, caractérisé en ce qu'une pièce de blocage ou de serrage est prévue sur l'extrémité libre de la pièce filetée.

7. Dispositif de fixation selon l'une des revendications 1 à 6, caractérisé en ce que la pièce de retenue (4) comporte des bords crantés.

8. Dispositif de fixation selon l'une des revendications 1 à 7, caractérisé en ce que la pièce de retenue (4) peut être tenue sur la pièce de véhicule (1) sans risque de se perdre avant l'introduction dans l'ouverture.

9. Dispositif de fixation selon l'une des revendications 1 à 8, caractérisé en ce que la pièce de retenue (4) comporte une ou plusieurs fentes (14).

10. Dispositif de fixation selon la revendication 9, caractérisé en ce que les fentes (14) s'étendent jusqu'à celui des bords de la pièce de retenue (4) qui est tourné vers la pièce de carrosserie (2).

11. Dispositif de fixation selon l'une des revendications 1 à 10, caractérisé en ce que la pièce de véhicule (1) comporte un ou plusieurs espaces libres (18) dans lesquels la pièce de retenue (4) ou des parties de celle-ci peuvent être logées lors de l'introduction dans l'ouverture (3).

12. Dispositif de fixation selon l'une des revendications 1 à 11, caractérisé en ce que la pièce de retenue (4) est en matière plastique.

13. Dispositif de fixation selon la revendication 12, caractérisé en ce que la matière plastique est du polyamide, par exemple PA 66.

14. Dispositif de fixation selon l'une des revendications 1 à 13, caractérisé en ce qu'un moyen formant ressort (26) est prévu entre la pièce de retenue (4) et la pièce de véhicule (1).

15. Dispositif de fixation selon l'une des revendications 1 à 14, caractérisé en ce qu'il est prévu sur celui (21) des côtés de la pièce de véhicule (1) qui est tourné vers la pièce de retenue (4) un tenon (19) qui passe à travers une ouverture (22) de la pièce de retenue (4) et qui comporte sur son extrémité libre une tête de tenon (20) qui dépasse au moins partiellement de l'ouverture (22).

16. Dispositif de fixation selon l'une des revendications 1 à 15, caractérisé en ce que la pièce de retenue (4) comporte une phase à son extrémité tournée vers la pièce de véhicule (1).

17. Dispositif de fixation selon l'une des revendications précédentes, caractérisé en ce qu'il est prévu entre la pièce de véhicule (1) et le bord (9) de l'ouverture (3) une garniture d'étanchéité (30), en ce que la pièce de retenue (4) entoure globalement régulièrement sur la circonférence la pièce de véhicule (1) et en ce qu'une force de serrage globalement régulière peut être exercée sur la garniture d'étanchéité par la fixation de la pièce de retenue (4).
